# EUROPEAN PATENT SPECIFICATION

(11) **EP 1 290 830 B1**
(45) Date of publication and mention of the grant of the patent: **08.09.2004**
(21) Application number: 01938434.6
(22) Date of filing: 13.06.2001
(51) Int. Cl.: H04L 12/28

(54) **CALL HANDLING DEVICE FOR CONTROLLING WIRELESS CONNECTIONS WITH WIRELESS COMMUNICATIONS DEVICES**
ANRUFSTEUERUNGSGERÄT ZUR STEUERUNG VON DRAHTLOSEN VERBINDUNGEN MIT DRAHTLOSEN KOMMUNIKATIONSGERÄTEN
DISPOSITIF DE TRAITEMENT D'APPELS PERMETTANT DE COMMANDER DES CONNEXIONS SANS FIL AU MOYEN DE DISPOSITIFS DE COMMUNICATIONS SANS FIL

(30) Priority: 13.06.2000 GB 0014431; 04.12.2000 GB 0029540
(43) Date of publication of application: 12.03.2003
(73) Proprietor: Red-M (Communications) Limited, Wexham, Slough SL3 6PJ (GB)
(72) Inventor: HARRISON, Simon, Buckinghamshire HP12 6EH (GB)
(74) Representative: Finnie, Peter John
(86) International application number: PCT/GB2001/002612
(87) International publication number: WO 2001/097458

(56) References cited:
- EP-A- 0 897 232
- WO-A-97/15155
- WO-A-99/23842
- HAARTSEN J: "BLUETOOTH - THE UNIVERSAL RADIO INTERFACE FOR AD HOC, WIRELESS CONNECTIVITY" ON - ERICSSON REVIEW, ERICSSON. STOCKHOLM, SE, no. 3, 1998, pages 110-117, XP000783249 ISSN: 0014-0171

## Description

### Field of the Invention

The present invention relates to a method and a call handling device for controlling wireless connections with wireless enabled communications devices, and in particular Bluetooth enabled communications devices.

### Background to the Invention

Currently, the majority of computer networks utilize some form of wiring for interconnecting the computers on the network. These systems suffer from the major drawbacks that wiring has to be installed within the building to enable the network to be fitted, and additionally, should a fault with the wiring develop, this can lead to the need for wiring to be replaced. In addition to this, the wiring can cause problems due to interference with other electrical equipment within the building, as well as only having a limited bandwidth. Furthermore, different networks require different wiring standards which further leads to the complexity of installing networks in buildings.

Wireless types of networks are now becoming more wide spread. Wireless communication can be broken down into one of three main categories, radio, cellular and local. Radio communications are used for mainly long distance work, and cellular communications are used for mobile phones and the like. At present, the cellular system can also be used to provide limited internet access using WAP (Wireless Application Protocol) phones. Internet access is also possible via a cellular phone, a GSM modem and a PC/PDA.

In addition to this, the local communication standards are also provided for short-range radio communication. These systems have been used within the production of wireless networks.

A Bluetooth Radio Frequency (RF) system is a Fast Frequency Hopping Spread Spectrum (FFHSS) system in which packets are transmitted in regular time slots on frequencies defined by a pseudo random sequence. A Frequency Hopping system provides Bluetooth with resilience against interference. interference may come from a variety of sources including microwave ovens and other communication systems operating in this unlicensed radio band which can be used freely around the world. The system uses 1MHz frequency hopping steps to switch among 79 frequencies in the 2.4GHz Industrial, Scientific and Medical (ISM) band at 1600 hops per second with each channel using a different hopping sequence.

The Bluetooth baseband architecture includes a Radio Frequency transceiver (RF), a Link Controller (LC) and a Link Manager (LM) implementing the Link Manager Protocol (LMP).

Bluetooth version 1.1 supports asymmetric data rates of up to 721 Kbits per second and 57.6Kbits per second and symmetric data rates of up to 432.5Kbits per second. Data transfers may be over synchronous connections, Bluetooth supports up to three pairs of symmetric synchronous voice channels of 64Kbits per second each.

Bluetooth connections operate in something called a piconet in which several nodes accessing the same channel via a common hopping sequence are connected in a point to multi-point network. The central node of a piconet is called a master that has up to seven active slaves connected to it in a star topology. The bandwidth available within a single piconet is limited by the master, which schedules time to communicate with its various slaves. In addition to the active slaves, devices can be connected to the master in a low power state known as park mode, these parked slaves cannot be active on the channel but remain synchronised to the master and addressable. Having some devices connected in park mode allows more than seven slaves be attached to a master concurrently. The parked slaves access the channel by becoming active slaves, this is regulated by the master.

Multiple piconets with overlapping coverage may co-operate to form a scattemet in which some devices participate in more that one piconet on a time division multiplex basis. These and any other piconets are not time or frequency synchronised, each piconet maintains is own independent master clock and hopping sequence.

The disadvantage with such wireless systems is that the radio devices typically only have a short range and a low bandwidth for transferring data. Accordingly, if wireless connectivity is to be provided over a wide area, such as throughout an airport, company offices or the like, it is typical for a large number of separate radio transceivers to be provided throughout the building. If these are coupled together to form a network, this can lead to significant problems in data traffic handling.

Thus, for example, if high bandwidth data, such as voice data, is transferred via a Bluetooth connection, it is unfeasible to transfer any other data via the same transceiver at the same time. This is because the high bandwidth of the voice data uses up all the available bandwidth of the wireless transceiver.

Accordingly, in circumstances in which a number of transceivers are provided it is essential to ensure that data is routed through the transceivers in such a way as to prevent overloading of any one given transceiver.

WO9923842A discloses a system which solves the problem of whether to admit a new wireless connection based on a knowledge of current quality of service (QOS) requirements, available bandwidth and potential new QOS requirements, and how to calculate aggregate QOS for the resulting network. It does this using an algorithm adapted to determine the new QOS requirements for the network in preparation for the new connection. However, the calculation of whether to admit the new connection is determined solely for one attachment point. The is no disclosure of having more than one attachment point and determining where to add new connections and how to arrange existing connections.

### Summary of the Invention

In accordance with the first aspect of the present invention, we provide a call handling device for controlling wireless connections with wireless enabled communications devices, the call handling device comprising:
at least two transceivers, each of which is capable of providing at least one wireless connection with a communications device; and
a processor for controlling the wireless connections, the processor being adapted to:
   monitor the transceivers to determine a transceiver usage for each transceiver,
   determine the connection requirements of each communications device;
   compare the transceiver usage and the connection requirements; and, control to which transceiver each communications device is connected in accordance with the result of the comparison.

In accordance with a second aspect of the present invention, we provide a method of controlling wireless connections with wireless enabled communications devices, the wireless connections being established via at least two transceivers, each of which is capable of providing at least one wireless connection with a communications device, the method comprising:
monitoring the transceivers to determine a transceiver usage for each transceiver;
determining the connection requirements of each communications device;
comparing the transceiver usage and the connection requirements; and,
controlling to which transceiver each communications device is connected in accordance with the result of the comparison.

Accordingly, the present invention provides a method and apparatus for controlling wireless connections established with wireless communications devices. The technique involves monitoring the transceivers via which connections are to be made in order to determine a transceiver usage for each transceiver. This provides an indication of the bandwidth available for the connections via each transceiver. This is then compared to the connection requirements of the relevant communication device to determine which transceivers are capable of establishing the connection.

The processor may be adapted to determine the connection requirements for each communications device by monitoring connection set-up messages received from the communications devices, the connection set-up messages including an indication of the connection requirement. Thus, for example, when the communications devices are polling the transceivers to indicate that a connection is required, some communication protocols will require that call set-up messages are transferred which indicate the connection requirements, that are required by the device.

Alternatively, if the connection is already established, or if connection set-up messages are not used, then the processor can be adapted to determine the connection requirements of each communications device by monitoring an existing wireless connection. In this case, the processor would monitor the connection and determine the connection requirements.

The connection requirements generally include at least one of a connection bandwidth, a quality of service and a signal strength. The connection requirements may therefore constitute at least one or more of these particular requirements. Thus for example, if the connection is a voice connection a high bandwidth and an associated high quality of service is required. Furthermore, if it is essential that the data does not include too many errors then it is also necessary to have a high signal strength. However, any number of connection requirements could be monitored in accordance with the present invention.

Typically the processor is adapted to control the wireless connections by ensuring that each communications device is connected via a transceiver selected in accordance with the results of the comparison. Thus, the processor preferably compares the transceiver usage to the connection requirements and selects an appropriate transceiver via which the connection should be made. Alternatively however the processor could simply arrange for the connection to be established via the first transceiver which receives the connection request. In this case, if the desired connection requirements cannot be achieved, then the connection could simply be moved to an alternative transceiver.

The processor can ensure that each communications device is connected to the selected transceiver by either establishing the new connection with the selected transceiver or transferring an existing connection from the currently used transceiver to the selected transceiver. Thus, if a connection is initially established with a transceiver which is unable to provide the desired connection requirements, then the connection can simply be handed over to an alternative transceiver using handover techniques which are described in our currently filed co-pending application, also entitled "Call Handling Device". Alternatively, however it could be that the connection is only established with a transceiver able to provide the desired connection requirements.

In the case in which an existing connection is being transferred, this is usually achieved by establishing an additional connection between the communications device and the selected transceiver and then breaking the existing connection. However, alternatively the existing connection can be broken before the new connection is established.

The processor usually selects the transceiver by determining a number of transceivers via which the communications device can be connected; and, selecting one of the number of transceivers which can satisfy the connection requirements. Thus, for example it is pointless allocating a transceiverwhich has sufficient bandwidth to satisfy the connection requirements but which is out of range of the communications device. Accordingly, the processor determines which transceivers are in range of the communications device and then operates to select one of these which satisfies the connection requirements.

If none of the number of transceivers can currently satisfy the connection requirements, then the processor is preferably adapted to transfer connections between the transceivers until one of the number of transceivers can satisfy the connection requirements. Thus for example it may be possible to group data connections onto a single transceiver, freeing up an alternative transceiver so as to provide a voice standard connection.

The number of transceivers are typically determined by causing each of the transceivers to attempt to establish a temporary connection with the communications device; and, determining which transceivers detect a response from the communications device. Alternatively however the transceivers can be adapted to monitor polling signals generated by the communications device. These polling signals will be generated at periodic intervals and if a transceiver receives a polling signal, this indicates that it is capable of establishing a connection with the communications device.

In the case in which a temporary connection is established, it is then typical to monitor the temporary connection and compare this to the predetermined connection criteria and then determine the number of transceivers in accordance with the results of the comparison. Thus, if the temporary connection only has a poor quality signal strength then it may not be desirable to use that connection even if the bandwidth requirements are met by that particular transceiver.

The processor may optionally be adapted to determine a connection priority. In this case the processor is adapted to ensure that high priority connections are maintained in preference to lower priority connections.

Thus, for example, voice data may be assigned a high priority whereas the updating of a PDA with e-mails, updated web pages, or the like may be assigned a low priority. This is because the updating of a PDA can be carried out at any time when there is more available bandwidth. In contrast to this however voice calls generally need to be maintained when they are made. Accordingly, the processor can be adapted to drop lower priority connections in favour of higher priority connections to ensure than connection requirements are maintained.

The connection priority is usually determined from the connection requirements and in particular, is usually determined from an indication of the nature of the data which will be transferred via the connection. However, it is also possible that a desired priority can be specified within the data itself.

A further option is for the priority to be assigned based on the user identity. Thus for example, a CEO (Chief Executive Officer) would typically be assigned a higher priority than a person in the back office, to ensure that the CEOs calls are connected in preference to others calls.

The processor may also optionally be adapted to ensure that connections having a predetermined connection priority are made via a transceiver which does not form any other connections. Accordingly, the voice data for example could be assigned the highest priority indicating no other data should be transferred via a transceiver when a voice call is in practice. This is not however essential to the operation of the present invention.

The call handling device may also optionally be coupled to a communications network, thereby allowing communications devices to communicate with the communications network. Again, however, this is not essential to the present invention.

Typically at least one of the transceivers is located remotely to the call handling device. This allows a distributed network to be provided allowing coverage to be obtained over a wide footprint area.

Preferably the connections are Bluetooth connections with the transceivers comprising Bluetooth transceivers. This is because Bluetooth provides a cheap, simple and reliable method of providing wireless connections. However, other suitable systems can also be used.

In this case, the communications device usually comprises one of a Bluetooth enabled headset, a Bluetooth enabled phone, a Bluetooth enabled PDA with voice communication facilities or the like.

Finally, the call handling device may be coupled to a communications network, such as a PBX (Private Branch Exchange), a PSTN (Public Switch Telephone Network), ISDN (Integrated Services Digital Network), or the Internet.

### Brief Description of the Drawings

Examples of the present invention will now be described in detail with reference to the accompanying drawings, in which:
Figure 1 is a schematic diagram of a network which provides wireless connections in accordance with the present invention;
Figure 2 is a schematic diagram of the Access Server of Figure 1;
Figure 3 is a schematic diagram of the Access Point of Figure 1;
Figure 4 is a schematic diagram showing the functionality of the Access Server and the Access Points; and,
Figure 5 is a flow diagram of the operation of the connection manager shown in Figure 4.

### Detailed Description

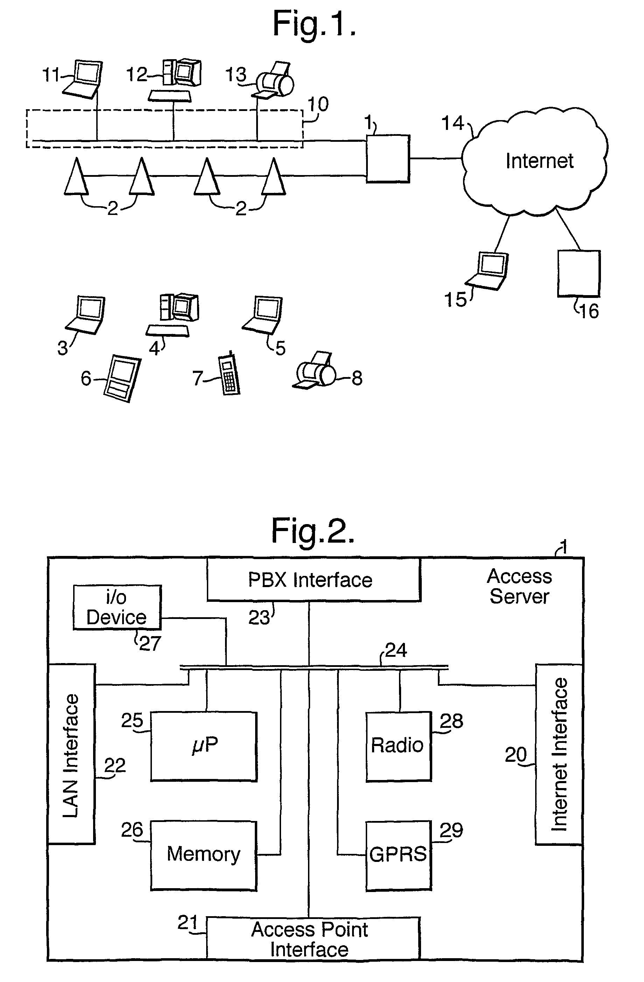

Figure 1 shows a basic network arrangement which provides wireless connections in accordance with the present invention. As shown, the network includes a wireless Internet Access Server 1 which is coupled to a number of local area network Access Points 2. The Access Points 2 are designed to communicate with a number of Bluetooth enabled communications devices 3,4,5,6,7,8 using Bluetooth connections.

In this scenario, the Bluetooth communication devices 3,4,5,6,7,8 can include devices such as a personal computer, laptop or the like which is fitted with a Bluetooth adapter, a specialised Bluetooth laptop, a Bluetooth enabled phone or mobile phone, a WAP Internet phone, a Bluetooth enabled personal data assistant (PDA) or a Bluetooth headset which are capable of establishing voice calls via the Bluetooth connections with the Access Points.

In fact under normal circumstances, the Access Server & Access Points can communicate with any Bluetooth enabled device. These include not only PCs, PDAs, and laptops but any of the following that have a Bluetooth port; a truck, a refrigerator, a baggage trolley, a keyboard etc, although this is not relevant for the purpose of the present invention.

The Access Server 1 is also optionally connected to a local area network 10 having a number of end stations 11,12,13. In this example, this allows the Access Server to be integrated with currently existing local area networks within a building.

The Access Server 1 can also be connected to a remote communications network 14, which in this example is the Internet. This allows the communications devices coupled to the Access Server to communicate with remote users 15 or Access Servers of other remote sites 16.

Accordingly, the Access Points 2 allow voice calls to be made by and received by the Bluetooth communications devices 3,4,5,6,7,8 in turn allowing voice calls to be made using the LAN 10 and the Internet 14, via the Access Server 1. In this case, the Access Server operates as a call controller, as will be described in more detail below.

The Access Server is shown in more detail in Figure 2.

The Access Server may include an Internet interface 20, an Access Point interface 21, a LAN interface 22 and a PBX interface 23, all of which are interconnected via a bus 24. A microprocessor 25 and a memory 26 which are provided for processing and storing the operating software, are also coupled to the bus 24. An input/output device 27 is also provided.

The processor 25 is typically an x86 type processor operating a Linux type operating system such as Red Hat Linux. This is particularly advantageous as the Linux system is widely used as the operating system for a number of different software applications. Accordingly, the system can implement a wide variety of standard operating software for network servers and the like, as well as allowing third parties the opportunity to modify existing software and develop their own software. However, any suitable form of processing system may be used.

In addition to these features, it is also possible to include a number of Bluetooth radios 28, and a GPRS transceiver 29, both of which are coupled to the BUS 24.

A range of radios are supported, including standard and enhanced range devices.

Similarly, the Bluetooth design of the Access Server and the Access Point offers capabilities beyond the basic Bluetooth specification. These include advanced control of Bluetooth device state to improve throughput, and control of broadcast and multicast traffic streams to/from Bluetooth devices.

In this example, four different interfaces 20,21,22,23 are shown. However, it is not essential for the Access Server 1 to include all of these interfaces, depending on the particular configuration which is to be used, as will be explained in more detail below.

Thus, in order to enable Bluetooth voice calls to be made between the Bluetooth communication devices and remote third parties, all that is required is forthe Access Server to include the Access Point interface 21, with appropriately connected Access Points 2, and one of the Internet interface 20, the LAN interface 22, or the PBX interface 23, coupled to an appropriate communications device. Thus, for example, the LAN interface 22 could be coupled to an Ethernet phone via the LAN 10. Further examples will be described in more detail below. Alternatively, the Access Point interface need not be used if the Bluetooth radios 28 are used instead. However, this will become clearer when various network configurations used by the Access Server are described in more detail below.

The Internet interface 20 is used primarily for providing an ISDN connection to an Internet service provider. However, the system can be reconfigured to use Ethernet, DSL or a POTS modem for Internet connectivity. Thus, this allows VolP calls to be transferred via the Internet 14.

The Access Point interface 21 is effectively an Ethernet interface which is adapted to operate with the Access Points, as will be explained in more detail below.

The LAN interface 22 is normally configured to be an Ethernet interface. However, this can be adapted to provide token ring or other forms of communication as required. Accordingly the LAN 10 can comprise an Ethernet, Token Ring or other similar network.

In order to be able to handle different communications protocols, each of the interfaces 20,21,22 will include a processor and a memory. The processor operates software stored in the memory which is appropriate for handling the required communications protocol. Thus in the case of the LAN interface 21, the default protocol is Ethernet. However, if alternative protocols such as Token Ring or ATM are used, then the software is adapted to translate the format of the data as it is transferred through the respective interface.

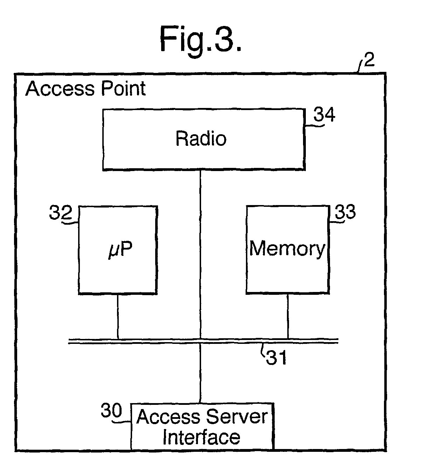

An Access Point according to the present invention is shown in Figure 3. The Access Point includes an Access Server interface 30, for connecting the Access Point to the Access Server. The Access Server interface 30 is connected via a BUS 31 to a processor 32 and a memory 33. The BUS is also coupled to a number of Bluetooth radios 34 (only one shown) providing enhanced capabilities such as improved bandwidth and call density.

The processor 32 is typically a processor system that can include one or more processors, of the same or different types within the system. For example, the processor system could include, but is not be limited to, a RISC (Reduced Instruction Set Computer) processor and a DSP (Digital Signal Processor) processor.

In use, the Access Points are usually connected to the Access Point interface 21 using a daisy chain Ethernet connection. This is particularly advantageous as it allows a large number of Access Points 2 to be connected in series via a single wire to the Access Point interface 21. In this case, power can be supplied to the Access Points 2 either via the connection from the Access Server 1, or via separate power supplies (not shown) connected to each of the Access Points 2 as required.

As an alternative however, the Access Points 2 can be connected to the Access Server 1 via an Ethernet hub, which generally allows a larger number of Access Points to be connected to a single Access Server.

In use, each Access Point 2 is able to communicate with a number of communications devices 3,4,5,6,7,8 which are in range of the respective Bluetooth radio 34. Any data received at the radio is transferred to the memory 33 for temporary storage. The processor 32 will determine from the data the intended destination. If this is another Bluetooth device within range of the Access Point, the data will be transferred via the radio 34 to the appropriate communications device 3,4,5,6,7,8. Otherwise the data will be transferred via the BUS 31 to the Access Server interface 30 and on to the Access Server 1.

Upon receipt of the data by the Access Server 1, the Access Point interface 21 will temporarily store the data in the memory whilst the processor determines the intended destination of the data. The processor may also operate to translate the format of the data, if this is necessary. The data is then routed by the Access Server to the intended destination on either the LAN 2, the Internet 14 or alternatively, to a PBX network, as will be described in more detail below.

The traffic from Bluetooth devices (arriving through a Access Point or the Access Server) can be sent to the LAN through a number of different mechanisms; one is routing, another uses a technique called Proxy ARP to reduce the configuration needed. These mechanisms are bi-directional and also connect traffic from the LAN to Bluetooth devices.

Similarly, data can be transferred from the Access Server, via the Access Point interface 21 to a Access Point 2. In this case, the Access Point 2 receives the data and transfers it into the memory 33. The processor 32 then uses the data to determine the intended destination communication device before routing the data appropriately.

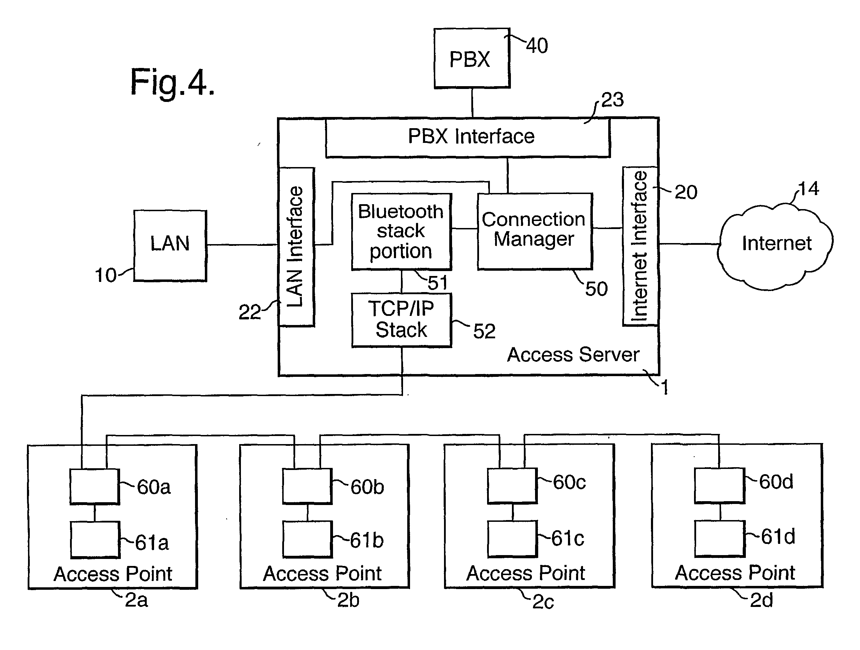

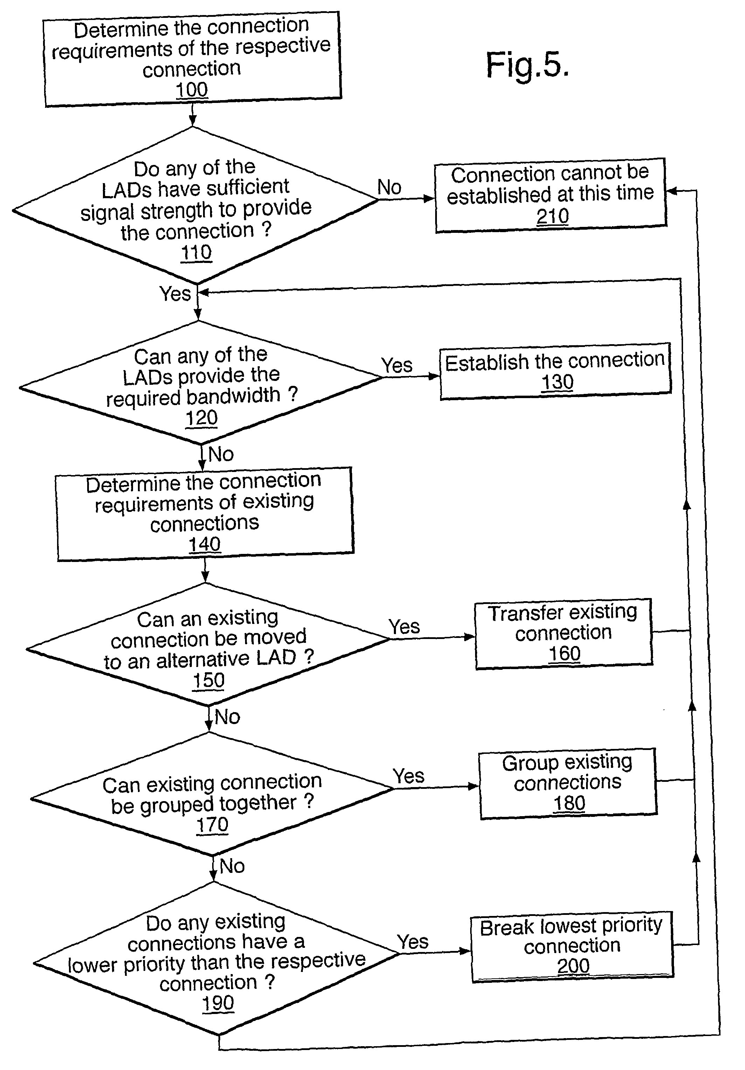

Operation of the Access Server to control the wireless connections established between the Bluetooth radios 34 and the communication devices 3,4,5,6,7,8 will now be described with reference to Figures 4 and 5, which show the functionality of the Access Server and the Access Points.

As shown in Figure 4, the Access Server 1 includes a connection manager 50 which is coupled to the Internet interface 20, the LAN Interface 22 and the PBX Interface 23, as well as being coupled to a Bluetooth stack 51 and a TCP/IP stack 52. The connection manager 50 is a software implemented device which is typically implemented using the processor 25.

The Bluetooth stack 51 and TCP/IP stack 52 are also software implemented and again this may be achieved by the processor 25. More typically however, the Bluetooth stack and the TCP/IP stack are implemented by the processor in the Access Point interface 21. However, this is not important for the operation of the present invention.

The connection manager 50 controls the operation of the Internet interface 20, the Access Point interface 21, the LAN interface 22 and the PBX interface 23, as well as controlling the transfer of data through the Access Server 1, and the Access Points 2 in accordance with predetermined policy rules.

In this example the Access Server is coupled to an Ethernet phone 55 via the LAN 10, to a standard telephone 56 via the PBX, and to an Internet phone 57, via the Internet 4.

As also shown in Figure 4, the Access Points 2a,2b include respective TCP/IP stacks 60a,60b and Bluetooth stacks 61a,61b. Again, the TCP/IP stack and the Bluetooth stacks 60,61 may be implemented within the Access Server interface 30, or within the processor 32.

In use, data received at one of the Bluetooth radios 3, is typically temporarily stored in the memory 33 before being transferred to the processor 32. At this stage, the Bluetooth stack 61 is used to place the data into the Bluetooth HCl (Host Controller Interface) format suitable for transmission over a connection, such as an RS232 connection, in accordance with the Bluetooth specification.

In the present example, the data is transferred to the TCP/IP stack 60 which converts the data into a format suitable for transmission over the Ethernet connection to the Access Server 1.

Upon receipt of the data at the Access Server 1 the data is transferred to the TCP/IP stack 52 which converts the data back into the Bluetooth HCl format for transfer over the connection to the Bluetooth stack 51. The Bluetooth stack 51 operates to translate the data from HCl format into the basic payload data which can then be transferred onto one of the Internet interface 20, the LAN interface 22 or the PDX interface 23. The routing of the data is achieved in accordance with routing information which is interpreted by the connection manager 50.

As a number of different connections are typically established between the Access Points 2 and the communications devices 3,4,5,6,7,8, it is necessary for the connection manager to control the connections in order to ensure that connections do not fail, or become overloaded, particularly as each Bluetooth radio can only transfer a limited bandwidth of data.

Thus for example, connections for transferring voice type calls, such as voice calls between one of the communications devices 3,4,5,6,7,8 and one of the phones 55,56,57, will require a high bandwidth connection that has a high quality of service. Each Bluetooth radio only has sufficient bandwidth to transfer one such call, and accordingly, if an attempt were made to transfer two such calls via a single Bluetooth radio, this would result in unacceptable call quality on both connections.

To overcome this, the connection manager 50 operates to optimise the connections between the communications devices and the Access Points to ensure that data can be transferred as required. In order to achieve this, the connection manager 50 determines various information about the status of the Bluetooth connections including details of:
i. The signal strength of each connection;
ii. The bandwidth required by each connection; and,
iii. The current usage of each Bluetooth radio 34 of each of the Access Points 2.

The signal strength can be either a direct determination of the strength of signal between the Bluetooth radio 34 and the respective communications device 3,4,5,6,7,8, or alternatively or additionally, this may be an indication of the number of errors occurring per unit time on the connection.

In addition to this, it is also possible to determine the signal strength of potential connections which have not yet been used for communications. This is because, even when data is not being transferred, the Access Points 2 will in any event poll the communications devices 3,4,5,6,7,8 to determine data is to be sent. This polling will allow the connection manager 50 to determine the signal strength between each Bluetooth radio 34 in each Access Point 2a,2b,2c,2d and the communications device 3,4,5,6,7,8.

This status information is then used by the connection manager 50 to control the connections via the Access Points 2 as set out in the flow diagram of Figure 5, which demonstrates the steps taken by the connection manager 50 to ensure that a connection can be established or maintained between one of the Access Points 2 and a communications device 3.

Firstly, as shown at step 100, the connection manager 50 determines connection requirements for the connection under consideration, which in this case is a voice type connection with one of the communications devices 3. The connection requirements generally include at least one of:
i. The bandwidth required by the connection; and,
ii. The quality of service required by the connection.

The quality of service requirement is used to indicate that the connection must satisfy certain data transfer requirements, such as a predetermined number of errors per unit time. Accordingly, the connection requirements typically inherently includes a desired signal strength for the connection.

The connection requirements are generally obtained either by determining the type of data which is being transferred and then referencing a look-up table (LUT) stored in the memory 26, or by determining connection requirements which are explicitly specified in control set-up messages.

In the first case, for example, the connection manager 50 can monitor an existing connection with the communications device 3 and determine that the data being transferred is voice data. The LUT stored in the memory 26 indicates the connection requirements for each type of data, and accordingly, this allows the connection manager 50 to determine that the connection requirements for the connection would be a high bandwidth and a high quality of service.

In the second case, control set-up messages can be transferred between the communications device 3 and the Access Points 2 when connection is being established. In this case, the control set-up messages include an indication of the connection requirements.

It will be appreciated that the connection requirements of each connection will generally be determined when the connection is established. Accordingly, an indication of the connection requirements can be stored in the memory 26, allowing , the connection manager to access the memory 26 and determine the connection requirements, for any existing connections.

Once this has been determined, the connection manager then determines which of the Access Points 2a,2b,2c,2d can form a connection with the respective communications device 3 at step 110.

This is achieved by determining which of the Access Points 2a,2b,2c,2d will have a signal strength which is capable of providing a connection, having the desired quality of service, with the respective communications device 3.

In this example, the connection manager determines that the Access Points 2a,2b,2c have sufficient signal strength to establish the desired connection with the communications device 3.

It will be realized that if none of the Access Points 2a,2b,2c,2d can provide the desired signal strength, then it will not be possible to establish a connection, as shown at step 210. However, with suitable distribution of the Access Points 2 this should not happen.

In order to achieve this, it may be necessary to cause each of the Bluetooth radios 34 of each of the Access Points 2a,2b,2c,2d to generate a polling signal and determine if a response is received from the respective communications device 3. If no response is received, then the signal strength is not sufficient to establish a connection.

Once a number of the Access Points 2a,2b,2c have been selected, the connection manager 50 then determines whether the Access Points can provide the desired connection requirements, such as the desired quality of service and/or bandwidth at step 120.

In order to achieve this, the connection manager will determine if the signal strength of a connection between the communications device 3 and each one of the Access Points 2a,2b,2c will provide the desired quality of service, and whether the Access Point 2a,2b,2c has the bandwidth available for satisfying the bandwidth requirements of the connection.

In the case in which any one of the Access Points 2a,2b,2c is able to provide the desired connection requirements, then the connection manager will simply select one of the Access Points 2a and establish the connection accordingly, at step 130.

In the case in which none of the Access Points 2a,2b,2c can offer the desired connection requirements, then the connection manager 50 moves onto step 140 to determine if any existing connections may be transferred to free up bandwidth.

In doing this the connection manager 50 will examine the connection requirements of the currently existing connections made via the Access Points 2a,2b,2c to see if any of these connections can be moved. Thus for example, it may be possible to move a connection currently established via the Access Point 2b to the Access Point 2d, thereby freeing up bandwidth on the Access Point 2b allowing the connection with the communications device 3 to be made. In order to determine this, the connection manager 50 considers the connection requirements of each existing connection at step 140 and determines whether any of the connections can be moved to an alternative Access Point 2 at step 150.

If a currently existing connection via the Access Point 2b can simply be transferred to an alternative Access Point 2d, then the connection manager 50 causes the connection to be transferred at step 160. The connection manager then returns to step 120 to determine if any of the Access Points, and in particular the Access Point 2b can now establish a connection with the communications device 3.

The transferring of connections between the Access Points 2 can be achieved in one of two ways.

Firstly, the existing connection via the Access Point 2b can be broken and then a new connection can be established by causing the Access Point 2d to generate a polling signal to which the communications device 3 responds.

Secondly, the connection manager 50 can cause a connection to be established between the Access Point 2d and the communications device 3 before the original connection with the Access Point 2b is broken. In this way, the user of the communications device 3 will be unaware of the fact that the connection he is using is being transferred from the Access Point 2b to the Access Point 2b.

If no one Access Point is available for a single connection to be transferred at step 150, then the connection manager moves to step 170 and determines if several connections can be transferred, and in particular whether several connections can be grouped together on a single Access Point.

Thus, for example, if the connections via the Access Points 2b,2c are connections having a low bandwidth requirement, such as for example simply transferring mail messages, or the like, then it is possible for the connection manager 50 to combine the single connections onto a single Access Point 2c, at step 180. Again this is achieved by moving existing connections from the Access Point 2b to the Access Point 2c.

Once the connections have been moved, the connection manager again determines if any of the Access Points 2 are now available for establishing the connection with the communications device 3.

In the current example, once the transfer of connections has been completed, the Access Point 2b becomes available for transferring data allowing the new connection to be established as required at step 130.

In the event that the moving of connections does not free up one of the Access Points 2a,2b,2c allowing the connection to be made, then the connection manager can fail to establish a connection at 210.

As an alternative however, as shown by the dotted line, the connection manager can utilise a priority system for controlling the connections, in which case the connection manager proceeds to step 190.

In this situation, different connections can be assigned respective a connection priority representative of the importance of having the connection established.

Thus for example, the connection priority of voice calls may be for example much higher than for the synchronization of a PDA with a computer system. This is because, voice calls generally have to be maintained under all circumstances with a required quality of service whereas PDA synchronization can be performed at any time.

If used, the connection priority would generally form part of the connection requirements determined in step 100 above. Thus, connection priorities may again be included in the control set-up messages or, alternatively, may be dependent on the nature of the data. Thus for example, voice calls may automatically be assigned a higher priority than other types of data transfer.

In this circumstance, if the connection manager 50 determines that the connection with the communications device 3 has a higher priority than existing connections via the Access Points 2a,2b,2c, then the connection manager disconnects the currently lowest priority connection allowing the higher priority connection to be established.

In general, only the lowest priority connection is broken at step 200, before the connection manager returns to step 120 to determine if any of the Access Points 2a,2b,2c can provide the desired connection requirements. Accordingly, a single connection will be broken and then remaining connection rearranged (if necessary) to allow the desired connection to be established.

The connection priority may also be assigned, for example, on the basis of the user of the communications device 3. Thus the connection priority could be based on the user name of the user of the communications device 3.

This allows high connection priorities to be assigned to certain members of a company, such as for example managing director. Thus, a person logging onto the network system as a guest may be assigned a much lower priority such that if the managing director is attempting to establish a connection via one of the Access Points this can result in the lower priority guest having their connection fail in favour of the managing directors.

Accordingly, it will be appreciated that the present invention controls the distribution of the connections between the Access Points to ensure as many connections as possible are maintained. In addition to this, the present invention allows higher priority connections to be achieved at the expense of lower priority connections should this become necessary.

Examples of different network arrangements which can be implemented with the present invention are described in the co-pending British Patent Application GB0014431.1, filed on 13 June 2000.

## Claims

1. A call handling device for controlling wireless connections with wireless enabled communications devices, the call handling device comprising:
at least two transceivers (2), each of which is capable of providing at least one wireless connection with a communications device; and
a processor (1) for controlling the wireless connections, the processor being adapted to:
monitor the transceivers (2) to determine a transceiver usage for each transceiver;
determine the connection requirements of each communications device;
compare the transceiver usage and the connection requirements; and, control to which transceiver each communications device is connected in accordance with the result of the comparison.

2. A call handling device according to claim 1, wherein the processor (1) is adapted to determine the connection requirements of each communications device by monitoring connection set-up messages received from the communications devices, the connection set-up messages including an indication of the connection requirements.

3. A call handling device according to claim 1 or claim 2, wherein the processor (1) is adapted to determine the connection requirements of each communications device by monitoring an existing wireless connection to determine the connection requirements of the respective communications device.

4. A call handling device according to any of claims 1 to 3, wherein the connection requirements include at least one of a connection bandwidth, a quality of service, and a signal strength.

5. A call handling device according to any of the preceding claims, wherein the processor (1) is adapted to control the wireless connections by ensuring that each communications device is connected via a transceiver (2) selected in accordance with the results of the comparison.

6. A call handling device according to claim 5, wherein the processor (1) is adapted to ensure that each communications device is connected to the selected transceiver (2) by:
establishing a new connection with the selected transceiver; or,
transferring an existing connection from the currently used transceiver to the selected transceiver.

7. A call handling device according to claim 6, wherein the processor (1) transfers an existing connection by:
establishing an additional connection between the communications device and
the selected transceiver; and,
breaking the existing connection between the communications device and the currently used transceiver.

8. A call handling device according to any of claims 5 to 7, wherein the processor (1) selects the transceiver (2) by:
determining a number of transceivers via which the communications device can be connected;
selecting one of the number of transceivers which can satisfy the connection requirements; and,
causing a connection to be established between the selected transceiver and the communications device.

9. A call handling device according to claim 8, wherein each of the number of transceivers (2) transfer set up messages to the communications device so as to cause a connection to be established between the selected transceiver and the communications device.

10. A call handling device according to claim 8, wherein if none of the number of transceivers (2) can currently satisfy the connection requirements, the processor (1) is adapted to transfer connections between the transceivers (2) until one of the number of transceivers can satisfy the connection requirements.

11. A call handling device according to claim 8, 9 or 10, wherein the processor (1) is adapted to determine the number of transceivers (2) by:
causing each of the transceivers (2) to attempt to establish a temporary connection with the communications device; and,
determining which transceivers (2) detect a response from the communications device.

12. A call handling device according to claim 11, wherein the processor (1) is further adapted to:
monitor the temporary connection;
compare the temporary connection to the predetermined connection criteria; and,
determine the number of transceivers in accordance with the results of the comparison.

13. A call handling device according to any of the preceding claims, wherein the processor (1) is adapted to determine a connection priority, wherein the processor (1) is adapted to ensure that higher priority connections are maintained in preference to lower priority connections.

14. A call handling device according to claim 13, wherein the connection priority is determined from the connection requirements.

15. A call handling device according to claim 13 or claim 14, wherein the processor (1) will not transfer a higher priority connection to allow a lower priority connection to be achieved.

16. A call handling device according to any of claims 13 to 15, wherein the processor (1) is adapted to ensure that connections having a predetermined connection priority are made via a transceiver (2) which does not form other connections.

17. A call handling device according to any of the preceding claims, wherein the call handling device is adapted to couple to a communications network (10, 14, 40), thereby allowing the communications devices to communicate with the communications network.

18. A call handling device according to any of the preceding claims, wherein at least one of the transceivers (2) is located remotely to the call handling device.

19. A call handling device according to any of the preceding claims, wherein the connections are Bluetooth connections, the transceivers comprising Bluetooth transceivers (2).

20. A call handling device according to claim 18, wherein the communications device comprises one of a Bluetooth enabled headset, a Bluetooth enabled phone, or a Bluetooth enabled PDA with voice communication facilities.

21. A call handling device according to any of the preceding claims, wherein the communications network is one of a PBX, PSTN, POTS or the internet.

22. A method of controlling wireless connections with wireless enabled communications devices, the wireless connections being established via at least two transceivers (2), each of which is capable of providing at least one wireless connection with a communications device, the method comprising:
monitoring the transceivers (2) to determine a transceiver usage for each transceiver;
determining the connection requirements of each communications device;
comparing the transceiver usage and the connection requirements; and,
controlling to which transceiver each communications device is connected in accordance with the result of the comparison.

23. A method according to claim 22, wherein the method comprises determining the connection requirements of each communications device by monitoring connection set-up messages received from the communications devices, the connection set-up messages including an indication of the connection requirements.

24. A method according to claim 22 or claim 23, wherein the method comprises determining the connection requirements of each communications device by monitoring an existing wireless connection to determine the connection requirements of the respective communications device.

25. A method according to claim to any of claims 22 to 24, wherein the method comprises controlling the wireless connections by ensuring that each communications device is connected via a transceiver (2) selected in accordance with the results of the comparison.

26. A method according to claim 25, wherein the method of ensuring that each communications device is connected to the selected transceiver comprises:
establishing a new connection with the selected transceiver; or,
transferring an existing connection from the currently used transceiver to the selected transceiver.

27. A method according to claim 26, wherein the method further comprises transferring an existing connection by:
establishing an additional connection between the communications device and
the selected transceiver; and,
breaking the existing connection between the communications device and the currently used transceiver.

28. A method according to claim any of claims 25 to 27, wherein the method of selecting the transceiver comprises:
determining a number of transceivers (2) via which the communications device can be connected;
selecting one of the number of transceivers which can satisfy the connection requirements; and,
causing a connection to be established between the selected transceiver and the communications device.

29. A method according to claim 28, wherein each of the number of transceivers (2) transfer set up messages to the communications device so as to cause a connection to be established between the selected transceiver and the communications device.

30. A method according to claim 28 or 29, wherein if none of the number of transceivers (2) can currently satisfy the connection requirements, the method comprises transferring connections between the transceivers (2) until one of the number of transceivers can satisfy the connection requirements.

31. A method according to claim 28, 29 or 30, wherein the number of transceivers (2) are determined by:
causing each of the transceivers (2) to attempt to establish a temporary connection with the communications device; and,
determining which transceivers detect a response from the communications device.

32. A method according to claim 31, wherein the method further comprises:
monitoring the temporary connection;
comparing the temporary connection to the predetermined connection criteria; and,
determining the number of transceivers in accordance with the results of the comparison.

33. A method according to any of claims 22 to 32, wherein the method further comprises determining a connection priority and ensuring that higher priority connections are maintained in preference to lower priority connections.

## Patentansprüche

1. Anrufabwicklungsvorrichtung zur Steuerung von drahtlosen Verbindungen mit drahtlos freigeschalteten Kommunikationsvorrichtungen, wobei die Anrufabwicklungsvorrichtung folgendes umfaßt:
mindestens zwei Transceiver (2), von denen jeder mindestens eine drahtlose Verbindung mit einer Kommunikationsvorrichtung schaffen kann; und
einen Prozessor (1) zum Steuern der drahtlosen Verbindungen, wobei der Prozessor
die Transceiver (2) überwachen kann, um für jeden Transceiver eine Transceiver-Nutzung festzulegen;
die Verbindungsanforderungen jeder Kommunikationsvorrichtung bestimmen kann;
die Transceiver-Nutzung und die Verbindungsanforderungen vergleichen kann; und steuern kann, mit welchem Transceiver jede Kommunikationsvorrichtung gemäß dem Ergebnis des Vergleichs verbunden wird.

2. Anrufabwicklungsvorrichtung nach Anspruch 1, wobei der Prozessor (1) die Verbindungsanforderungen für jede Kommunikationsvorrichtung durch Überwachung der von den Kommunikationsvorrichtungen empfangenen Verbindungsaufbaumitteilungen bestimmen kann, wobei die Verbindungsaufbaumeldungen eine Angabe zu den Verbindungsanforderungen enthalten.

3. Anrufabwicklungsvorrichtung nach Anspruch 1 oder Anspruch 2, wobei der Prozessor (1) die Verbindungsanforderungen für jede Kommunikationsvorrichtung durch Überwachung einer bestehenden drahtlosen Verbindung zur Bestimmung der Verbindungsanforderungen für die jeweilige Kommunikationsvorrichtung bestimmen kann.

4. Anrufabwicklungsvorrichtung nach einem der Ansprüche 1 bis 3, wobei die Verbindungsanforderungen mindestens eines von einer Verbindungsbandbreite, einer Betriebsqualität und einer Signalintensität umfaßt.

5. Anrufabwicklungsvorrichtung nach einem der vorhergehenden Ansprüche, wobei der Prozessor (1) die drahtlosen Verbindungen steuern kann, indem er sicherstellt, daß jede Kommunikationsvorrichtung über einen gemäß den Ergebnissen des Vergleichs gewählten Transceiver (2) verbunden ist.

6. Anrufabwicklungsvorrichtung nach Anspruch 5, wobei der Prozessor (1) sicherstellen kann, daß jede Kommunikationsvorrichtung mit dem gewählten Transceiver (2) verbunden wird, indem er
eine neue Verbindung mit dem gewählten Transceiver herstellt; oder
eine bestehende Verbindung von dem zur Zeit benutzten Transceiver zu dem gewählten Transceiver überführt.

7. Anrufabwicklungsvorrichtung nach Anspruch 6, wobei der Prozessor (1) eine bestehende Verbindung überführt, indem er
eine zusätzliche Verbindung zwischen der Kommunikationsvorrichtung und dem gewählten Transceiver herstellt; und
die bestehende Verbindung zwischen der Kommunikationsvorrichtung und dem gewählten Transceiver abbricht.

8. Anrufabwicklungsvorrichtung nach einem der Ansprüche 5 bis 7, wobei der Prozessor (1) den Transceiver (2) wählt, indem er
eine Anzahl von Transceivern bestimmt, über welche die Kommunikationsvorrichtung verbunden werden kann;
einen von der Anzahl von Transceivern wählt, welche die Verbindungsanforderungen erfüllen können; und
die Herstellung einer Verbindung zwischen dem gewählten Transceiver und der Kommunikationsvorrichtung bewirkt.

9. Anrufabwicklungsvorrichtung nach Anspruch 8, wobei jeder von der Anzahl von Transceivern (2) Aufbaumitteilungen zu der Kommunikationsvorrichtung überträgt, so daß die Herstellung einer Verbindung zwischen dem gewählten Transceiver und der Kommunikationsvorrichtung bewirkt wird.

10. Anrufabwicklungsvorrichtung nach Anspruch 8, wobei dann, wenn keiner von der Anzahl von Transceivern (2) zur Zeit die Verbindungsanforderungen erfüllen kann, der Prozessor (1) Verbindungen zwischen den Transceivern (2) übertragen kann, bis einer von der Anzahl von Transceivern die Verbindungsanforderungen erfüllen kann.

11. Anrufabwicklungsvorrichtung nach Anspruch 8, 9 oder 10, wobei der Prozessor (1) die Anzahl der Transceiver (2) bestimmen kann, indem er
jeden von den Transceivern (2) zu dem Versuch veranlaßt, eine zeitweilige Verbindung mit der Kommunikationsvorrichtung herzustellen; und
bestimmt, welche Transceiver (2) eine Antwort von der Kommunikationsvorrichtung erfassen.

12. Anrufabwicklungsvorrichtung nach Anspruch 11, wobei der Prozessor (1) ferner
die zeitweilige Verbindung überwachen kann;
die zeitweilige Verbindung mit den vorgegebenen Verbindungskriterien vergleichen kann; und
die Anzahl der Transceiver gemäß den Ergebnissen des Vergleichs bestimmen kann.

13. Anrufabwicklungsvorrichtung nach einem der vorhergehenden Ansprüche, wobei der Prozessor (1) eine Verbindungspriorität bestimmen kann, wobei der Prozessor (1) sicherstellen kann, daß Verbindungen höherer Priorität in Vorzug gegenüber Verbindungen niedriger Priorität gehalten werden.

14. Anrufabwicklungsvorrichtung nach Anspruch 13, wobei die Verbindungspriorität durch die Verbindungsanforderungen bestimmt wird.

15. Anrufabwicklungsvorrichtung nach Anspruch 13 oder Anspruch 14, wobei der Prozessor (1) eine Verbindung höherer Priorität nicht überträgt, damit eine Verbindung niedriger Priorität zustande gebracht würde.

16. Anrufabwicklungsvorrichtung nach einem der Ansprüche 13 bis 15, wobei der Prozessor (1) sicherstellen kann, daß Verbindungen mit einer vorgegebenen Verbindungspriorität über einen Transceiver (2) erfolgen, der keine anderen Verbindungen bildet.

17. Anrufabwicklungsvorrichtung nach einem der vorhergehenden Ansprüche, wobei die Anrufabwicklungsvorrichtung mit einem Kommunikationsnetz (10, 14, 40) gekoppelt werden kann, wodurch die Kommunikationsvorrichtungen mit dem Kommunikationsnetz in Verbindung treten können.

18. Anrufabwicklungsvorrichtung nach einem der vorhergehenden Ansprüche, wobei mindestens einer von den Transceivern (2) von der Anrufabwicklungsvorrichtung entfernt angeordnet ist.

19. Anrufabwicklungsvorrichtung nach einem der vorhergehenden Ansprüche, wobei die Verbindungen Bluetooth-Verbindungen sind und die Transceiver Bluetooth-Transceiver (2) umfassen.

20. Anrufabwicklungsvorrichtung nach Anspruch 18, wobei die Verbindungsvorrichtung eines von einem mit Bluetooth freigeschalteten Handgerät, einem mit Bluetooth freigeschalteten Telefon oder einem mit Bluetooth freigeschalteten PDA-Gerät mit Sprachübertragungseinrichtungen umfaßt.

21. Anrufabwicklungsvorrichtung nach einem der vorhergehenden Ansprüche, wobei das Kommunikationsnetz eines von einem PBX, PSTN, POTS oder von dem Internet ist.

22. Verfahren zur Steuerung von drahtlosen Verbindungen mit drahtlos freigeschalteten Kommunikationsvorrichtungen, wobei die drahtlosen Verbindungen über mindestens zwei Transceiver (2) hergestellt werden, von denen jeder mindestens eine drahtlose Verbindung mit einer Kommunikationsvorrichtung schaffen kann, wobei das Verfahren folgendes umfaßt:
das Überwachen der Transceiver (2), um für jeden Transceiver eine Transceiver-Nutzung zu bestimmen;
das Bestimmen der Verbindungsanforderungen für jede Kommunikationsvorrichtung;
das Steuern, mit welchem Transceiver jede Kommunikationsvorrichtung gemäß dem Ergebnis des Vergleichs verbunden wird.

23. Verfahren nach Anspruch 22, wobei das Verfahren das Bestimmen der Verbindungsanforderungen für jede Kommunikationsvorrichtung durch Überwachen der von den Kommunikationsvorrichtungen empfangenen Verbindungsaufbaumitteilungen umfaßt, wobei die Verbindungsaufbaumeldungen eine Angabe zu den Verbindungsanforderungen enthalten.

24. Verfahren nach Anspruch 22 oder Anspruch 23, wobei das Verfahren das Bestimmen der Verbindungsanforderungen für jede Kommunikationsvorrichtung durch Überwachen einer bestehenden drahtlosen Verbindung zum Bestimmen der Verbindungsanforderungen für die jeweilige Kommunikationsvorrichtung umfaßt.

25. Verfahren nach Anspruch einem der Ansprüche 22 bis 24, wobei das Verfahren das Steuern der drahtlosen Verbindungen umfaßt, indem sichergestellt wird, daß jede Kommunikationsvorrichtung über einen gemäß den Ergebnissen des Vergleichs gewählten Transceiver (2) verbunden ist.

26. Verfahren nach Anspruch 25, wobei das Verfahren zum Sicherstellen, daß jede Kommunikationsvorrichtung mit dem gewählten Transceiver verbunden ist, folgendes umfaßt:
das Herstellen einer neuen Verbindung mit dem gewählten Transceiver; oder
das Überführen einer bestehenden Verbindung von dem zur Zeit benutzten Transceiver zu dem gewählten Transceiver.

27. Verfahren nach Anspruch 26, wobei das Verfahren ferner das Überführen einer bestehenden Verbindung umfaßt, indem
eine zusätzliche Verbindung zwischen der Kommunikationsvorrichtung und dem gewählten Transceiver hergestellt wird; und
die bestehende Verbindung zwischen der Kommunikationsvorrichtung und dem gewählten Transceiver abgebrochen wird.

28. Verfahren nach einem der Ansprüche 25 bis 27, wobei das Verfahren zum Wählen des Transceivers folgendes umfaßt:
das Bestimmen einer Anzahl von Transceivern (2), über welche die Kommunikationsvorrichtung verbunden werden kann;
das Wählen von einem von der Anzahl von Transceivern, welche die Verbindungsanforderungen erfüllen können; und
das Bewirken der Herstellung einer Verbindung zwischen dem gewählten Transceiver und der Kommunikationsvornchtung.

29. Verfahren nach Anspruch 28, wobei jeder von der Anzahl von Transceivern (2) Aufbaumitteilungen zu der Kommunikationsvorrichtung überträgt, so daß das Herstellen einer Verbindung zwischen dem gewählten Transceiver und der Kommunikationsvorrichtung bewirkt wird.

30. Verfahren nach Anspruch 28 oder 29, wobei dann, wenn keiner von der Anzahl von Transceivern (2) zur Zeit die Verbindungsanforderungen erfüllen kann, das Verfahren das Übertragen von Verbindungen zwischen den Transceivern (2) umfaßt, bis einer von der Anzahl von Transceivern die Verbindungsanforderungen erfüllen kann.

31. Verfahren nach Anspruch 28, 29 oder 30, wobei die Anzahl der Transceiver (2) bestimmt wird, indem:
jeder von den Transceivern (2) zu dem Versuch veranlaßt wird, eine zeitweilige Verbindung mit der Kommunikationsvorrichtung herzustellen; und
bestimmt wird, welche Transceiver eine Antwort von der Kommunikationsvorrichtung erfaßt.

32. Verfahren nach Anspruch 31 wobei das Verfahren ferner folgendes umfaßt:
das Überwachen der zeitweiligen Verbindung;
das Vergleichen der zeitweiligen Verbindung mit den vorgegebenen Verbindungskriterien; und
das Bestimmen der Anzahl der Transceiver gemäß den Ergebnissen des Vergleichs.

33. Verfahren nach einem der Ansprüche 22 bis 32, wobei das Verfahren ferner das Bestimmen einer Verbindungspriorität und das Sicherstellen umfaßt, daß Verbindungen höherer Priorität in Vorzug gegenüber Verbindungen niedriger Priorität gehalten werden.

## Revendications

1. Dispositif d'acheminement d'appels destiné à commander des connexions sans fil avec des dispositifs adaptés de communication sans fil, le dispositif d'acheminement d'appels comprenant :
au moins deux émetteurs-récepteurs (2), dont chacun est capable de fournir au moins une connexion sans fil avec un dispositif de communication ; et
un processeur (1) destiné à commander les connexions sans fil, le processeur étant adapté pour:
surveiller les émetteurs-récepteurs (2), pour déterminer une utilisation des émetteurs-récepteurs pour chaque émetteur-récepteur ;
déterminer les besoins de connexion de chaque dispositif de communication ;
comparer l'utilisation des émetteurs-récepteurs et les besoins de connexion ; et,
commander à quel émetteur-récepteur chaque dispositif de communication est connecté conformément au résultat de la comparaison.

2. Dispositif d'acheminement d'appels selon la revendication 1, dans lequel le processeur (1) est adapté pour déterminer les besoins de connexion de chaque dispositif de communication, en surveillant des messages d'établissement de connexion reçus depuis les dispositifs de communication, les messages d'établissement de connexion comprenant une indication des besoins de connexion.

3. Dispositif d'acheminement d'appels selon la revendication 1 ou la revendication 2, dans lequel le processeur (1) est adapté pour déterminer les besoins de connexion de chaque dispositif de communication en surveillant une connexion sans fil existante, pour déterminer les besoins de connexion du dispositif respectif de communication.

4. Dispositif d'acheminement d'appels selon l'une quelconque des revendications 1 à 3, dans lequel les besoins de connexion comprennent au moins l'une parmi une bande passante de connexion, une qualité de service, et une intensité du signal.

5. Dispositif d'acheminement d'appels selon l'une quelconque des revendications précédentes, dans lequel le processeur (1) est adapté pour commander les connexions sans fil en assurant que chaque dispositif de communication est connecté via un émetteur-récepteur (2) sélectionné, conformément aux résultats de la comparaison.

6. Dispositif d'acheminement d'appels selon la revendication 5, dans lequel le processeur (1) est adapté pour assurer que chaque dispositif de communication est connecté à l'émetteur-récepteur (2) sélectionné par les étapes consistant à :
établir une nouvelle connexion avec l'émetteur-récepteur sélectionné ; ou,
transférer une connexion existante depuis l'émetteur-récepteur en cours d'utilisation vers l'émetteur-récepteur sélectionné.

7. Dispositif d'acheminement d'appels selon la revendication 6, dans lequel le processeur (1) transfère une connexion existante par les étapes consistant à :
établir une connexion supplémentaire entre le dispositif de communication et l'émetteur-récepteur sélectionné ; et,
couper la connexion existante entre le dispositif de communication et l'émetteur-récepteur en cours d'utilisation.

8. Dispositif d'acheminement d'appels selon l'une quelconque des revendications 5 à 7, dans lequel le processeur (1) sélectionne l'émetteur-récepteur (2) par les étapes consistant à :
déterminer un certain nombre d'émetteurs-récepteurs via lesquels le dispositif de communication peut être connecté ;
sélectionner un émetteur-récepteur faisant partie du nombre, qui puisse satisfaire aux besoins de connexion ; et,
provoquer l'établissement d'une connexion entre l'émetteur-récepteur sélectionné et le dispositif de communication.

9. Dispositif d'acheminement d'appels selon la revendication 8, dans lequel chacun des émetteurs-récepteurs (2) faisant partie du nombre transfère des messages d'établissement vers le dispositif de communication de manière à provoquer l'établissement d'une connexion entre l'émetteur-récepteur sélectionné et le dispositif de communication.

10. Dispositif d'acheminement d'appels selon la revendication 8, dans lequel si aucun des émetteurs-récepteurs (2) faisant partie du nombre ne peut actuellement satisfaire aux besoins de connexion, le processeur (1) est adapté pour transférer des connexions entre les émetteurs-récepteurs (2) jusqu'à ce qu'un des émetteurs-récepteurs faisant partie du nombre puisse satisfaire aux besoins de connexion.

11. Dispositif d'acheminement d'appels selon la revendication 8, 9 ou 10, dans lequel le processeur (1) est adapté pour déterminer les émetteurs-récepteurs (2) faisant partie du nombre par les étapes consistant à :
provoquer auprès de chacun des émetteurs-récepteurs (2) une tentative d'établissement d'une connexion temporaire avec le dispositif de communication ; et,
déterminer quels émetteurs-récepteurs (2) détectent une réponse venant du dispositif de communication.

12. Dispositif d'acheminement d'appels selon la revendication 11, dans lequel le processeur (1) est en outre adapté pour :
surveiller la connexion temporaire ;
comparer la connexion temporaire aux critères prédéterminés de connexion ; et,
déterminer les émetteurs-récepteurs faisant partie du nombre conformément aux résultats de la comparaison.

13. Dispositif d'acheminement d'appels selon l'une quelconque des revendications précédentes, dans lequel le processeur (1) est adapté pour déterminer une priorité de connexion, dans lequel le processeur (1) est adapté pour assurer que des connexions à priorité plus élevée sont maintenues de préférence à des connexions à priorité plus basse.

14. Dispositif d'acheminement d'appels selon la revendication 13, dans lequel la priorité de connexion est déterminée à partir des besoins de connexion.

15. Dispositif d'acheminement d'appels selon la revendication 13 ou la revendication 14, dans lequel le processeur (1) ne transférera pas une connexion à priorité plus élevée pour permettre à une connexion à priorité plus basse d'être exécutée.

16. Dispositif d'acheminement d'appels selon l'une quelconque des revendications 13 à 15, dans lequel le processeur (1) est adapté pour assurer que des connexions ayant une priorité de connexion prédéterminée sont faites via un émetteur-récepteur (2) qui ne forme pas d'autres connexions.

17. Dispositif d'acheminement d'appels selon l'une quelconque des revendications précédentes, dans lequel le dispositif d'acheminement d'appels est adapté pour se coupler à un réseau de communication (10, 14, 40), permettant ainsi aux dispositifs de communication de communiquer avec le réseau de communication.

18. Dispositif d'acheminement d'appels selon l'une quelconque des revendications précédentes, dans lequel au moins un des émetteurs-récepteurs (2) est situé loin du dispositif d'acheminement d'appels.

19. Dispositif d'acheminement d'appels selon l'une quelconque des revendications précédentes, dans lequel les connexions sont des connexions Bluetooth, les émetteurs-récepteurs étant constitués d'émetteurs-récepteurs (2) Bluetooth.

20. Dispositif d'acheminement d'appels selon la revendication 18, dans lequel le dispositif de communication est constitué d'un dispositif parmi un casque téléphonique adapté Bluetooth, un téléphone adapté Bluetooth, ou un PDA (assistant numérique personnel) adapté Bluetooth avec des fonctions de communication vocale.

21. Dispositif d'acheminement d'appels selon l'une quelconque des revendications précédentes, dans lequel le réseau de communication est un réseau parmi un PBX, un PSTN, un POTS ou l'Internet.

22. Procédé de commande de connexion sans fil avec des dispositifs adaptés de communication sans fil, les connexions sans fil étant établies via au moins deux émetteurs-récepteurs (2), dont chacun est capable de fournir au moins une connexion sans fil avec un dispositif de communication, le procédé comprenant les étapes consistant à :
surveiller les émetteurs-récepteurs (2) pour déterminer une utilisation des émetteurs-récepteurs pour chaque émetteur-récepteur ;
déterminer les besoins de connexion de chaque dispositif de communication ;
comparer l'utilisation des émetteurs-récepteurs et les besoins de connexion ; et,
commander à quel émetteur-récepteur chaque dispositif de communication est connecté conformément au résultat de la comparaison.

23. Procédé selon la revendication 22, dans lequel le procédé comprend la détermination des besoins de connexion de chaque dispositif de communication en surveillant des messages d'établissement de connexion reçus depuis les dispositifs de communication, les messages d'établissement de connexion comprenant une indication des besoins de connexion.

24. Procédé selon la revendication 22 ou la revendication 23, dans lequel le procédé comprend la détermination des besoins de connexion de chaque dispositif de communication en surveillant une connexion sans fil existante pour déterminer les besoins de connexion du dispositif respectif de communication.

25. Procédé selon l'une quelconque des revendications 22 à 24, dans lequel le procédé comprend la commande des connexions sans fil en assurant que chaque dispositif de communication est connecté via un émetteur-récepteur (2) sélectionné conformément aux résultats de la comparaison.

26. Procédé selon la revendication 25, dans lequel le procédé pour assurer que chaque dispositif de communication est connecté à l'émetteur-récepteur sélectionné comprend les étapes consistant à :
établir une nouvelle connexion avec l'émetteur-récepteur sélectionné ; ou,
transférer une connexion existante depuis l'émetteur-récepteur en cours d'utilisation vers l'émetteur-récepteur sélectionné.

27. Procédé selon la revendication 26, dans lequel le procédé comprend en outre le transfert d'une connexion existante par les étapes consistant à :
établir une connexion supplémentaire entre le dispositif de communication et l'émetteur-récepteur sélectionné ; et,
couper la connexion existante entre le dispositif de communication et l'émetteur-récepteur en cours d'utilisation.

28. Procédé selon l'une quelconque des revendications 25 à 27, dans lequel le procédé de sélection de l'émetteur-récepteur comprend les étapes consistant à :
déterminer un certain nombre d'émetteurs-récepteurs (2) via lesquels le dispositif de communication peut être connecté ;
sélectionner un émetteur-récepteur faisant partie du nombre qui puisse satisfaire aux besoins de connexion ; et,
provoquer l'établissement d'une connexion entre l'émetteur-récepteur sélectionné et le dispositif de communication.

29. Procédé selon la revendication 28, dans lequel chacun des émetteurs-récepteurs (2) faisant partie du nombre transfère des messages d'établissement vers le dispositif de communication de manière à provoquer l'établissement d'une connexion entre l'émetteur-récepteur sélectionné et le dispositif de communication.

30. Procédé selon la revendication 28 ou 29, dans lequel si aucun des émetteurs-récepteurs (2) faisant partie du nombre ne peut actuellement satisfaire aux besoins de connexion, le procédé comprend l'étape consistant à transférer des connexions entre les émetteurs-récepteurs (2) jusqu'à ce qu'un des émetteurs-récepteurs faisant partie du nombre puisse satisfaire aux besoins de connexion.

31. Procédé selon la revendication 28, 29 ou 30, dans lequel les émetteurs-récepteurs (2) faisant partie du nombre sont déterminés par les étapes consistant à :
provoquer auprès de chacun des émetteurs-récepteurs (2) une tentative d'établissement d'une connexion temporaire avec le dispositif de communication ; et,
déterminer quels émetteurs-récepteurs détectent une réponse venant du dispositif de communication.

32. Procédé selon la revendication 31, dans lequel le procédé comprend en outre les étapes consistant à :
surveiller la connexion temporaire ;
comparer la connexion temporaire aux critères prédéterminés de connexion ; et,
déterminer les émetteurs-récepteurs faisant partie du nombre conformément aux résultats de la comparaison.

33. Procédé selon l'une quelconque des revendications 22 à 32, dans lequel le procédé comprend en outre l'étape consistant à déterminer une priorité de connexion et à assurer que des connexions à priorité plus élevée sont maintenues de préférence à des connexions à priorité plus basse.
